(19) Europäisches Patentamt

European Patent Office

Office européen des brevets

(11) **EP 0 865 137 B2**

(12) **NEUE EUROPÄISCHE PATENTSCHRIFT**

(45) Veröffentlichungstag und Bekanntmachung des Hinweises auf die Entscheidung über den Einspruch:
**29.11.2006 Patentblatt 2006/48**

(51) Int Cl.:
***H02H 7/085*** (2006.01)

(45) Hinweis auf die Patenterteilung:
**24.05.2000 Patentblatt 2000/21**

(21) Anmeldenummer: **98103677.5**

(22) Anmeldetag: **03.03.1998**

(54) **Verfahren zur Steuerung des Schliessvorgangs von Schliessvorrichtungen mit mindestens einem elektromotorisch bewegten Teil**

Method of controlling the closing procedure of closable devices with at least one part driven by an electric motor

Procédé pour controller la procédure de fermeture de dispositifs de fermeture avec au moins un membre actionné par moteur électrique

(84) Benannte Vertragsstaaten:
**DE FR GB IT SE**

(30) Priorität: **13.03.1997 DE 19710338**

(43) Veröffentlichungstag der Anmeldung:
**16.09.1998 Patentblatt 1998/38**

(73) Patentinhaber: **Conti Temic microelectronic GmbH**
**90411 Nürnberg (DE)**

(72) Erfinder:
• **Driendl, Dieter**
**88693 Untersiggingen (DE)**
• **Kessler, Erwin**
**88348 Saulgau (DE)**
• **Kleiner, Kurt**
**88605 Messkirch (DE)**
• **Schulter, Wolfgang, Dr.**
**88709 Meersburg (DE)**

(74) Vertreter: **Bucher, Ralf Christian et al**
**Arth, Bucher & Kollegen,**
**Patentanwälte,**
**Alte Landstrasse 23**
**85521 Ottobrunn (DE)**

(56) Entgegenhaltungen:
DE-A- 3 514 223        DE-A- 4 316 898
DE-C- 3 034 118        DE-C- 4 339 365
DE-C- 19 514 257       US-A- 4 641 067

EP 0 865 137 B2

**Beschreibung**

Die Erfindung betrifft ein Verfahren zur Steuerung des Schließvorgangs von Schließvorrichtungen mit mindestens einem elektromotorisch bewegten Teil wie es aus der US 4,641,067 bekannt ist.

Schließvorrichtungen mit elektromotorisch bewegten Teilen sind vielfältig in Gebrauch - beispielsweise in Kraftfahrzeugen für die elektrische Betätigung von Seitenfenstem und Schiebedächem. Bei Betätigungsvorgängen dieser Schließvorrichtungen, insbesondere jedoch bei automatisch ablaufenden Schließvorgängen (d.h. bei einer Realisierung von Automatikfunktionen), besteht die Gefahr des Einklemmens von Körperteilen oder Gegenständen; daher ist für einige Schließvorrichtungen per Verordnung ein Einklemmschutz vorgeschrieben, aus Sicherheitsgründen sollte dieser aber generell bei derartigen Schließvorrichtungen vorgesehen werden. Zur Gewährleistung eines Einklemmschutzes kann der Schließvorgang des elektromotorisch bewegten Teils hinsichtlich etwaiger Hindemisse beispielsweise entweder durch optische Detektion oder durch Bestimmung und Auswertung (des zeitlichen Verlaufs) der beim Einklemmen entstehenden Klemmkraft überwacht werden.

Da die direkte Bestimmung der Klemmkraft wegen der hierfür benötigten Sensoren (beispielsweise Kraftsensoren oder Drehmomentsensoren) recht kostspielig ist, wird die Klemmkraft bzw deren zeitlicher Verlauf indirekt durch Erfassung mindestens einerfür die Belastung des Elektromotors charakteristischen, als Meßgrößefungierenden Motorkenngröße des Elektromotors bestimmt (beispielsweise in der DE 30 34 118 C2 durch Erfassung der Motordrehzahl oder in der DE 44 42 171 A1 durch Erfassung des Motorstroms). Der momentane Meßwert der Motorkenngröße wird durch Vergleich mit einer Referenzmessung oder mehreren Referenzmessungen ausgewertet (d.h. es werden die relativen Änderungen der momentanen Meßgröße bezüglich eines zeitlich oder örtlich zurückliegenden Referenzwerts derselben Meßgröße ausgewertet); beim Überschreiten eines vorgegebenen Grenzwerts (Auslöseschwellwerts) wird ein Einklemmereignis angenommen und hierauf eine bestimmte Reaktion der Schließvorrichtung initiiert (beispielsweise wird eine Reversierung des Motorantriebs vorgenommen oder der Motorstrom abgeschaltet). Bei der gattungsbildenden US 4,641,067 wird eine Überwachung des Schließvorgangs begonnen, wenn die Motorkenngröße Motorstrom konstant ist, d.h. wenn die Anlaufphase des Motorantriebs abgeschlossen ist. Hierbei wird der jeweils aktuelle Meßwert des Motorstroms mit den Meßwerten des Motorstroms aus zurückliegenden Zeitintervallen verglichen; im Falle einer Überlastung des Motors wird auf ein Einklemmen geschlossen und der Antrieb reversiert oder angehalten.

Problematisch ist jedoch die oftmals unzureichende Überwachung des Schließvorgangs und der damit verbundene ungenügende Einklemmschutz unmittelbar nach der Aktivierung des Schließvorgangs (d.h. beim Anlaufen des Elektromotors), da in dieser Anlaufphase noch keine Referenzmessung vorliegt bzw noch kein geeigneter Referenzwert zur Verfügung steht. Insbesondere bereiten solche Schließvorgänge Probleme, die unmittelbar auf Öffnungsvorgänge folgen, da hierbei zunächst ein Ausgleich des Antriebsspiels ("Spielausgleich") der Schließvorrichtung (insbesondere des Spiels der Motor-/Getriebeanordnung) erfolgt; oftmals kann demzufolge nicht zwischen einer Belastungszunahme nach erfolgtem Spielausgleich (d.h. einem nach dem Spielausgleich entstehenden Kraftaufbau zur Überwindung der Haftreibungsgrenze) und einem tatsächlichen Einklommereignis unterschieden werden.

Eine Möglichkeit zur Umgehung dieser Problematik besteht darin, jedem Schließvorgang einen kurzen Öffnungsvorgang vorzuschalten (bsp. wie in der DE 35 14 223 C2 oder der DE 33 46 366 C2 beschrieben); hierdurch wird erreicht, daß einerseits der Spielausgleich und die anschließende Belastungszunahme (Verspannung der mechanischen Anordnung der Schließvorrichtungen) beim Erreichen der ursprünglichen Position des elektromotorisch bewegten Teils bereits abgeschlossen sind und daß andererseits bereits ein geeigneter Referenzwert für die Auswertung zur Verfügung steht. Nachteilig hierbei ist jedoch, daß die (üblicherweise als Relais ausgebildeten) zur Aktivierung des Betätigungsvorgangs vorgesehenen Schaltkontakte bei jedem Schließvorgang zweimal belastet werden und damit erhöhte Anforderungen an die Schaltkontakte gestellt werden müssen, was insbesondere bei Anwendungen in der Automobilindustrie wegen der damit verbundenen Kosten unerwünscht ist.

Eine andere Möglichkeit besteht darin, den automatisch ablaufenden Schließvorgang (die Automatikfunktion) des elektromotorisch bewegten Teils erst dann freizugeben, wenn bereits ein definierter Schließweg zurückgelegt wurde. Nachteilig hierbei ist jedoch, daß eine bei einer Betätigung des Schließvorgangs oftmals erwünschte sofortige Aktivierung der Automatikfunktion nicht möglich ist.

Aus der DE 195 14 257 C1 ist es bekannt, in der Anlaufphase eines Motors, insbesondere eines Fensterheber-Motors, einen anfänglichen Perioden-Grenzwert mit einem aktuellen Periodenwert des Motors zu vergleichen. Hierbei wird der anfängliche Perioden-Grenzwert aus zumindest einem gegen Ende der vorangegangenen Verstellung aufgetretenen, als Bezugswert gespeicherten Periodenwert vorausberechnet. Damit kann ein wirksamer Einklemmschutz trotz der sich in der Anlaufphase recht stark verändernden Motorperiode erzielt werden.

Weiterhin ist aus der DE 43 16 898 A1 ein Einklemmschutz für einen automatischen Fensterheber bekannt, bei dem mit einem Totgangdetektor ein Totgang des Fensterheber-Motors festgestellt werden kann. Bei Feststellung eines Totgangs wird zunächst ein Bezugswert zum Auslösen des Einklemmschutzes auf einen großen negativen Wert eingestellt, wodurch der Einklemmschutz zwangsweise gesperrt wird. Sinkt die Absolutdrehzahl des Motors unter einen Bezugswert für die Drehzahl, wird der Bezugswert zum Auslösen auf einen Wert eingestellt, der um 20% niedriger als der Standard-Bezugswert zum Auslösen ist. Nach Ablauf einer vorgegebenen Zeitdauer wird dann der Bezugswert zum Auslösen auf den Standard-Bezugswert eingestellt. Dadurch lässt sich ebenfalls ein Einklemmschutz in der Anlaufphase des Motors realisieren, wenn auch mit eingeschränkter Sensitivität.

Der Erfindung liegt die Aufgabe zugrunde, ein Verfahren anzugeben, das einen wirksamen Einklemmschutz unter allen Umgebungsbedingungen bzw Betriebsbedingungen der Schließvorrichtung gewährleistet.

Diese Aufgabe wird gemäß der Erfindung durch die Merkmale des Patentanspruchs 1 gelöst.

Vorteilhafte Weiterbildungen und Ausgestaltungen des Verfahrens ergeben sich aus den Unteransprüchen.

Das nachfolgend beschriebene Verfahren ermöglicht die Erkennung von Einklemmereignissen bereits in der Anlaufphase von Schließvorgängen, indem das Anlaufverhalten der Schließvorrichtung (d.h. von der ersten Bestromung des Elektromotors bis zum stationären Lauf des Elektromotors in der "Normalphase") hinsichtlich Spielausgleich und Schwergängigkeit analysiert wird; hierdurch kann insbesondere eine Unterscheidung zwischen der Anlaufphase eines "normalen" (ohne Einklemmereignis ablaufenden) Schließvorgangs und einem in der Anlaufphase auftretenden Einklemmereignis mit oftmals dem gleichen Verlauf der als Meßgröße herangezogenen Motorkenngröße getroffen werden. Vorteilhafterweise kann dann - auch bei sofortigem Wirksamwerden der Automatikfunktion - ein Einklemmereignis in allen Phasen des Schließvorgangs zuverlässig detektiert werden, wodurch das Verfahren einen wirksamen Einklemmschutz und somit eine hohe Sicherheit gewährleistet.

Zur Durchführung des Verfahrens sind folgende sukzessive Verfahrensschritte vorgesehen:

- Bestimmung eines schließwegabhängigen Aktivierungswerts (eines Werts, ab dem der Einklemmschutz aktiviert wird) in Abhängigkeit mindestens einer Motorkenngröße; dieser Aktivierungswert legt fest, ab welchem zurückgelegten Schließweg nach Beginn des Schließvorgangs der Einklemmschutz wirksam werden soll. Als Aktivierungswert kann entweder der beim Extremwert einer Motorkenngröße zurückgelegte Schließweg fungieren oder (wenn dieser Extremwert der Motorkenngröße nicht signifikant detektiert werden kann) der bei einer bestimmten maximal zulässigen Anzahl an Motorumdrehungen zurückgelegte Schließweg.

- Charakterisierung des aktuellen Schließvorgangs hinsichtlich eines etwaigen Ausgleichs des Antriebsspiels (d.h. eine Unterscheidung dahingehend, ob die Anlaufphase des aktuellen Schließvorgangs mit oder ohne Spielausgleich erfolgt) und hinsichtlich der die kumulierte Reibung widerspiegelnden, im Verlauf des Drehmoments des Elektromotors sich manifestierenden (absoluten) Schwergängigkeit der Schließvorrichtung bzw. der Motor-/Getriebeanordnung (unter Berücksichtigung der Steifigkeit der mechanischen Anordnung als Maß für deren Verbiegung) durch Ermittlung von Vorgabewerten für die für den aktuellen Schließvorgang (Meßvorgang) als Meßgröße/n herangezogenen Motorkenngröße/n. Hierzu wird durch Vorgabe eines Startwerts der Motorkenngröße/n der Ausgangspunkt für die weiteren Vorgabewerte des aktuellen Schließvorgangs, durch Vorgabe eines Zielwerts der (prognostizierte) Endwert für die Vorgabewerte (der Vorgabeendwert) und durch Vorgabe des funktionalen (schließwegabhängigen) Verlaufs der Motorkenngröße/n anhand einer bestimmten numerischen Funktion die Art und Weise festgelegt, wie dieser Zielwert (Vorgabeendwert) erreicht werden soll. Insbesondere kann als Startwert der innerhalb eines bestimmten Schließwegbereichs ermittelte lokale Extremwert einer Motorkenngröße (bsp. das Minimum des Motorstroms oder/und das Maximum der Motordrehzahl), als Vorgabeendwert der beim vorhergehenden Schließvorgang erhaltene Endwert der Motorkenngröße/n und als funktionaler (schließwegabhängiger) Verlauf eine quadratische Abhängigkeit der Motorkenngröße vom Schließweg vorgegeben werden.

- Fortlaufende Ermittlung der (aktuellen) Meßwerte der Motorkenngröße/n und Vergleich mit den jeweiligen schließwegabhängigen Vorgabewerten der Motorkenngröße/n; anhand dieses Vergleichs der schließwegabhängigen Vorgabewerte mit den Meßwerten der jeweiligen Motorkenngröße bzw. des jeweiligen Verlaufs der vorgegebenen Motorkenngröße (Vorgabekurve) mit dem Verlauf der real ermittelten Motorkenngröße (Meßkurve) wird ein Differenzwert gebildet. Beim Überschreiten eines Korrekturgrenzwerts wird eine Korrektur der Vorgabewerte bzw. der Vorgabekurve und damit eine adaptive Anpassung der Vorgabewerte bzw. der Vorgabekurve an die Meßwerte bzw. die Meßkurve vorgenommen; demzufolge verläuft die Vorgabekurve ohne Einklemmereignis in einem definiertem Abstand parallel zur Meßkurve.

- Kontinuierliche Bildung eines Auslöseschwellwerts basierend auf den adaptiv angepaßten Vorgabewerten der Motorkenngröße/n und einem die Auslösecharakteristik widerspiegelnden konstanten Offsetwert.

- Bewertung des aktuellen Meßwerts der Motorkenngröße/n bzw. des Verlaufs der Meßkurve/n unter Verwendung dieses Auslöseschwellwerts: da die Vorgabekurve für eine Motorkenngröße ohne Einklemmereignis in einem definiertem Abstand parallel zur Meßkurve dieser Motorkenngröße verläuft, wird der Auslöseschwellwert durch keinen Meßwert der Motorkenngröße des aktuellen Schließvorgangs erreicht; überschreitet jedoch der aktuelle Meßwert einer Motorkenngröße den Auslöseschwellwert oder die aktuellen Meßwerte einer bestimmten Anzahl an Motorkenngrößen den jeweiligen Auslöseschwellwert, wird ein Einklemmereignis angenommen, woraufhin die hierfür vorgesehenen Reaktionen der Schließvorrichtungen initiiert werden (bsp. wird durch Reversierung des Elektromotors ein Öffnungsvorgang eingeleitet).

Die Kenntnis über den Ausgleich des Antriebsspiels (Spielausgleich) wird bei der Anpassung der Vorgabewerte der Motorkenngröße/n, insbesondere für Plausibilitätsbetrachtungen hinsichtlich der möglichen schließwegabhängigen Aktivierungswerte bzw. bei der Bewertung der aktuellen Meßwerte der Motorkenngröße/n berücksichtigt. Die Kenntnis über den Ausgleich des Antriebsspiels (Spielausgleich) wird zumindest durch Bewertung des vorhergehenden Betätigungsvorgangs (der letzten Bewegungsrichtung) des elektromotorisch bewegten Teils gewonnen: falls als vorhergehender Betätigungsvorgang ein Öffnungsvorgang durchgeführt wurde, wird das Vorhandensein eines Spielausgleichs angenommen; weiterhin kann zusätzlich ein die aktuelle relative Position des elektromotorischen Teils charakterisierender Zählwert (bsp. der mittels Hallsensoren generierte Zählerstand eines je nach Position des elektromotorischen Teils inkrementierten oder dekrementierten Zählers) herangezogen werden und/oder der Signalverlauf mindestens einer Kenngröße des Elektromotors (bsp. der Motorstrom und/oder die Motordrehzahl), insbesondere durch Vergleich des beim aktuellen Schließvorgang ermittelten Extremwerts der Motorkenngröße (bsp. des Minimums des Motorstroms oder/und des Maximums der Motordrehzahl) mit einem über eine Vielzahl von Schließvorgängen ermittelten (langzeitgefilterten) Extremwert.

Weiterhin kann der Auslöseschwellwert unter Berücksichtigung von Störgrößen (Bordnetzstörungen, mechanische Schwingungen der Schließanordnung) variiert werden.

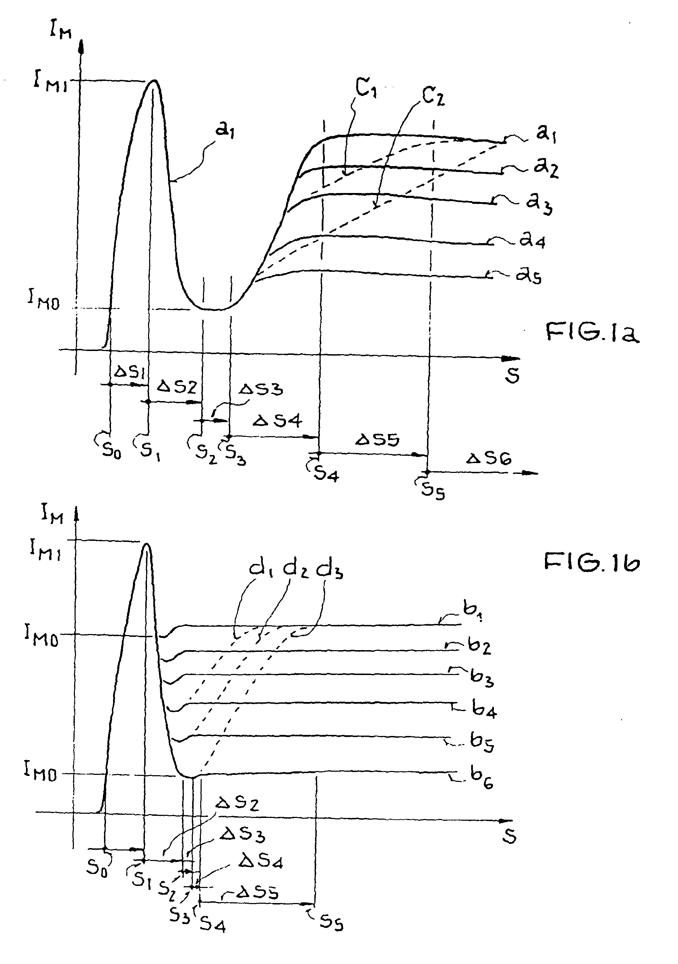

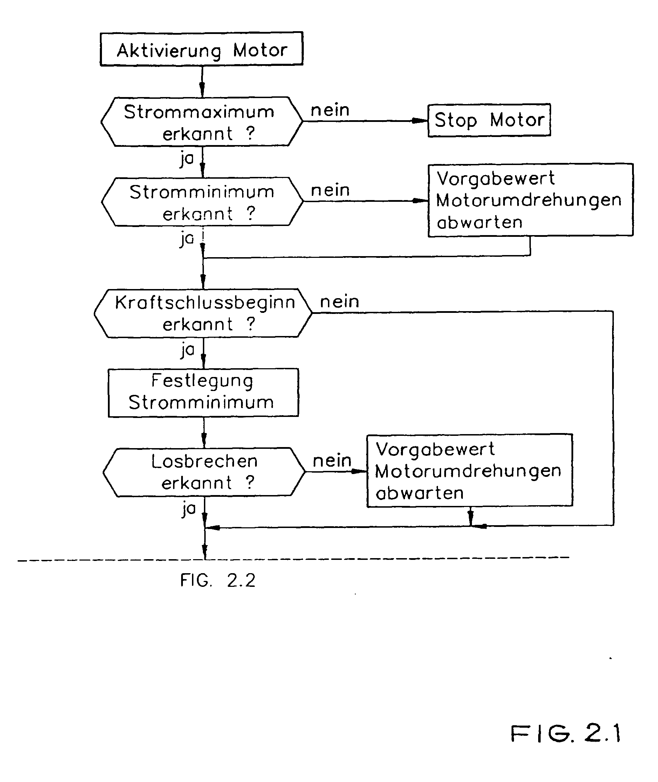

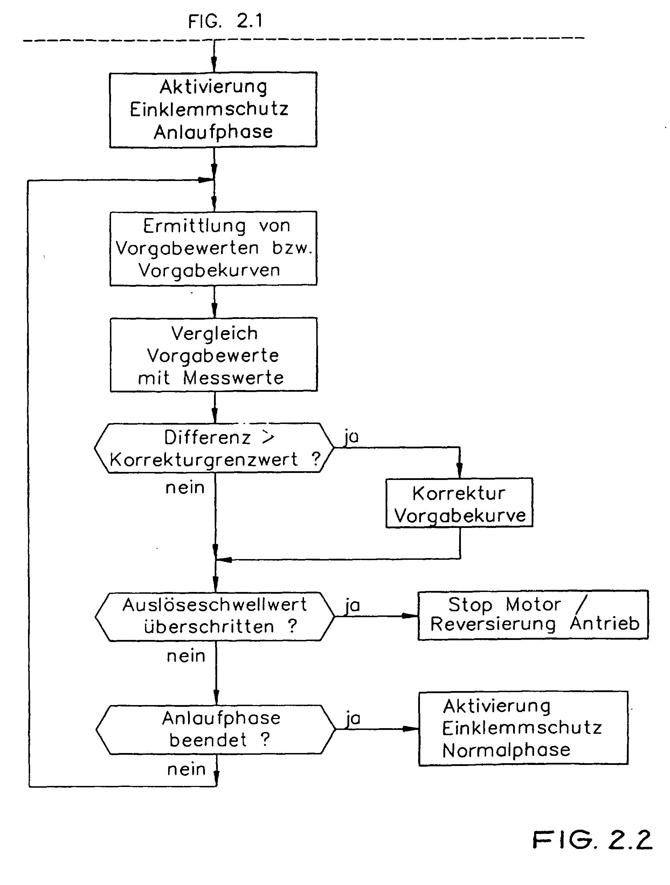

Im folgenden wird das Verfahren im Zusammenhang mit der Zeichnung (Figuren 1 und 2) am Beispiel des elektromotorisch betätigten Fensterheber-Antriebs eines Kraftfahrzeugs bei Verwendung des Motorstroms als Motorkenngröße beschrieben. Hierbei zeigen:

Figur 1 den schließwegabhängigen Verlauf der Motorkenngröße Motorstrom $I_M$ bei einem Anlauf mit Spielausgleich (Figur 1a) und bei einem Anlauf ohne Spielausgleich (Figur 1 b) bei unterschiedlicher Schwergängigkeit des Fensterheber-Antriebs,

Figur 2 ein Flußdiagramm zur Verdeutlichung des Verfahrensablaufs.

Nach der Vorgabe eines Schließbefehls für die Fensterscheiben des Kraftfahrzeugs (Aktivierung des Schließvorgangs) wird der Fensterheber-Antrieb (die Schließvorrichtung) aktiviert. In der Anlaufphase des Fensterheber-Antriebs mit Spielausgleich (Figur 1a) erfolgt zunächst ein Ausgleich des Antriebsspiels der Motor-/Getriebeanordnung; während dieses Spielausgleichs dreht der Elektromotor bereits, wobei die auf den Elektromotor wirkende Last relativ gering ist. In der Anlaufphase des Fensterheber-Antriebs ohne Spielausgleich (Figur 1 b), d.h. ohne Ausgleich des Antriebsspiels der Motor-/ Getriebeanordnung (insbesondere bei Anläufen ohne Richtungsumkehr), ist die Mechanik der Kraftfahrzeugtüre noch vom vorhergehenden Hochlauf der Fensterscheibe vorgespannt (man befindet sich bereits im sogenannten Kraftschluß). Nach diesem mehr oder weniger ausgeprägten Spielausgleich nimmt die Belastung des elektromotorischen Fensterheber-Antriebs (der Schließvorrichtung) bis zum Erreichen der Haftreibungsgrenze zu, wobei der Verlauf der Belastungszunahme im wesentlichen durch die Steifigkeit bzw. die Elastizität der Getriebemechanik und des Türblechs der Kraftfahrzeugtüre geprägt ist; nach Überschreiten der Haftreibungsgrenze bewegt sich die Fensterscheibe und der Elektromotor wird mit der näherungsweise konstanten Reibkraft der Motor-/Getriebeanordnung belastet. Demzufolge kann gemäß den Figuren 1a und 1b der Verlauf des Motorstroms $I_M$ in der Anlaufphase des Fensterheber-Antriebs, d.h. nach der Aktivierung des Fensterheber-Antriebs bis zum Erreichen des stationären Zustands des Einklemmschutzes in der "Normalphase" (Scheibenweg ca. 2 cm), in vier aufeinanderfolgende schließwegabhängige Bereiche unterteilt werden:

- in den Anstiegsbereich (die Anlaufstromspitze) im Wegintervall $\Delta s_1$ zwischen den Schließwegen $s_0$ und $s_1$; der Stromgradient im Anstiegsbereich wird im wesentlichen durch die Induktivität der Spulenwicklung des Elektromotors und die Betriebsspannung des Fensterheber-Antriebs (Kraftfahrzeugs?) bestimmt, die Amplitude der Anlaufstromspitze (das Maximum $I_{M1}$ des Motorstroms $I_M$) darüberhinaus von der internen Haftreibung und der augenblicklichen Ankerstellung des Elektromotors,

- in den Freilaufbereich im Wegintervall $\Delta s_2 + \Delta s_3$ zwischen den Schließwegen $s_1$ und $s_3$, in dem das Spiel des Fensterheber-Antriebs (Gummidämpfer der Getriebeanordnung, Hebemechanik) ausgeglichen wird; der Stromgradient während des Stromabfalls (die fallende Flanke) wird im wesentlichen durch das Massenträgheitsmoment des Ankers des Elektromotors bestimmt, das Minimum $I_{MO}$ des Motorstroms $I_M$ beim Schließweg $s_2$ in erster Näherung von der Gleitreibung der Motor-/Getriebeanordnung. Gemäß Figur 1b ist der Freilaufbereich (insbesondere das Minimum $I_{M0}$ des Motorstroms $I_M$) in der Anlaufphase des Fensterheber-Antriebs ohne Spielausgleich nur schwach ausgeprägt,

- in den Verformungsbereich im Wegintervall $\Delta s_4$ zwischen den Schließwegen $s_3$ und $s_4$, in dem der Kraftaufbau erfolgt; hierbei wird die Kraftfahrzeugtüre (die Türmechanik, insbesondere das Türgestänge und das Türblech) abhängig von deren Steifigkeit mit einer bestimmten Verformungskraft verformt, so daß der Elektromotor demnach quasi gegen eine Feder mit progressiver Federkonstante arbeitet,

- in den Losbrech- und Bewegungsbereich im Wegintervall $\Delta s_5$ zwischen den Schließwegen $s_4$ und $s_5$; nach dem Erreichen des Losbrechmomentes beginnt sich die Fensterscheibe zu bewegen, wobei sich in Abhängigkeit der Schwergängigkeit des Fensterheber-Antriebs (insbesondere durch witterungsbedingte und alterungsbedingte Einflüsse der Fensterscheibe) unterschiedliche Kurvenverläufe ergeben (gemäß Figur 1a die Kurven $a_1$ bis $a_5$ und gemäß Figur 1b die Kurven $b_1$ bis $b_6$); die Anlaufphase ist abgeschlossen (Schließweg $s_4$), wenn der Motorstrom $I_M$ konstant ist, d.h. wenn sich die Fensterscheibe mit konstanter Geschwindigkeit bewegt.

Während der "Normalphase" (d.h. der "normalen" Bewegung der Fensterscheibe) treten im Wegintervall $\Delta s_5$ zwischen den Schließwegen $s_4$ und $s_5$ Einschwingvorgänge der zur Auswertung des Verlaufs des Motorstroms $I_M$ vorgesehenen Auswerteschaltung auf, so daß der Einklemmschutz in der Normalphase ab dem Schließweg $s_5$, d.h. im Wegintervall $\Delta s_6$ voll wirksam ist.

Die Kurven $a_1$ (Figur 1a) und $b_1$ (Figur 1b) legen als Grenzkurven den möglichen Arbeitsbereich fest, innerhalb dessen die Erkennung eines Einklemmereignisses möglich ist. Die Kurven $c_1$, $c_2$ (Figur 1a) und $d_1$, $d_2$, $d_3$ (Figur 1 b) beschreiben den schließwegabhängigen Verlauf des Motorstroms $I_M$ bei einem Einklemmereignis in der Anlaufphase des Fensterheber-Antriebs.

Wie den Figuren 1a und 1b entnommen werden kann (vgl. insbesondere die Kurve $a_3$ der Figur 1a und die Kurve $d_1$ der Figur 1 b), besitzt ein Schließvorgang der Fensterscheibe (Scheibenhochlauf) ohne Spielausgleich bei einem unmittelbar zu Beginn des Schließvorgangs (in der Anlaufphase) stattfindenden Einklemmereignis (hier muß frühzeitig eingegriffen werden, bsp. der Antrieb des Elektromotors reversiert werden) den gleichen schließwegabhängigen Verlauf des Motorstroms $I_M$ wie ein schwergängiger Fensterheber-Antrieb (bzw. eine schwergängige Fensterscheibe) mit Spielausgleich aber ohne Einklemmereignis (hier muß nicht eingegriffen werden); d.h. eine sehr schwergängige Fensterscheibe bzw ein schwergängiger Fensterheber-Antrieb unterscheidet sich bis zur Überwindung der Haftreibung im Hinblick auf den Motorstrom $I_M$ nicht von einem sehr harten eingeklemmten Gegenstand.

Da in der Anlaufphase des Fensterheber-Antriebs dynamische Laständerungen mit großer Amplitude wirken und die Auswerteschaltung zur Bestimmung der beim Einklemmen entstehenden Klemmkraft noch nicht funktionsfähig ist (Einschwingvorgänge), wird zur Gewährleistung eines auch in der Anlaufphase wirkenden Einklemmschutzes das Anlaufverhalten des Fensterheber-Antriebs bzw. der Fensterscheibe bezüglich Spielausgleich und Schwergängigkeit unter Heranziehung des schließwegabhängigen Verlaufs mindestens einer Motorkenngröße, bsp. des Motorstroms $I_M$, analysiert.

Gemäß dem Flußdiagramm der Figur 2 sind in Analogie zur schließwegabhängigen Unterteilung des Verlaufs der Motorkenngröße Motorstrom $I_M$ nach der Aktivierung des Elektromotors mehrere Verfahrensschritte in Abhängigkeit des zurückgelegten Schließwegs vorgesehen:

- Ermittlung der Anlaufstromspitze (des Maximums $I_{M1}$ des Motorstroms $I_M$): Die Anlaufstromspitze (das Maximum $I_{M1}$ des Motorstroms $I_M$) charakterisiert den Zeitpunkt, zu dem der Anker des (Gleichstrom-)Elektromotors losbricht. Im Zeitraum von der ersten Bestromung bis zum Losbrechen verhält sich der Elektromotor wie ein RL-Glied; daher kann aus dem Anstiegsverhalten (dem Gradienten des Anstiegs) des Motorstroms $I_M$ bei kleinen Werten des Motorstroms $I_M$ ein zeitlicher Grenzwert abgeleitet werden, zu dem der Anker ohne Antriebsblockierung spätestens losbrechen muß. Falls bis zu diesem zeitlichen Grenzwert keine Anlaufstromspitze (kein Maximum $I_{M1}$ des Motorstroms $I_M$) erkannt wurde - dies bedeutet, daß der Elektromotor oder die Verkabelung des Elektromotors defekt ist -, wird der Antrieb und daher der Elektromotor gestoppt; falls dagegen eine Anlaufstromspitze (ein Maximum $I_{M1}$ des Motorstroms $I_M$) erkannt wurde, wird zum nächsten Verfahrensschritt übergegangen.

- Ermittlung des Minimums $I_{M0}$ des Motorstroms $I_M$:
  Das Minimum $I_{M0}$ des Motorstroms $I_M$ charakterisiert den Zeitpunkt, zu dem der Elektromotor (wie oben dargelegt) einen mehr oder weniger stark ausgeprägten Ausgleich des Antriebsspiels (einen Spielausgleich) durchführt (das Minimum $I_{M0}$ des Motorstroms $I_M$ fällt zeitlich mit dem Maximum der Motordrehzahl zusammen). Falls ein Minimum $I_{M0}$ des Motorstroms $I_M$ erkannt wurde, wird zum nächsten Verfahrensschritt übergegangen; falls dagegen kein signifikantes Minimum $I_{M0}$ des Motorstroms $I_M$ erkannt wurde (wie dies insbesondere bei Schließvorgängen ohne Spielausgleich auftreten kann), wird nach einer vorgegebenen Anzahl von Ankerumdrehungen des Elektromotors (diese Anzahl wird anhand des maximal möglichen Antriebsspiels vorgegeben) zum nächsten Verfahrensschritt übergegangen.

- Ermittlung des Kraftschlußbeginns:
  Der Kraftschlußbeginn charakterisiert den Zeitpunkt, an dem der Kraftschluß zwischen dem Elektromotor (bzw dessen Anker) und der Fensterscheibe bzw dem Fensterheber-Antrieb hergestellt wird, d.h. der Motorstrom $I_M$ steigt nach Erreichen des Minimums $I_{M0}$ wieder an. Falls ein Mindeststromanstieg (festgelegter Offsetwert auf das Minimum $I_{M0}$) erkannt wurde, wird der Wert des Minimums $I_{M0}$ des Motorstroms $I_M$ festgelegt (dieser Wert ersetzt ggf. das früher festgelegte Minimum $I_{M0}$) und zum nächsten Verfahrensschritt übergegangen; falls der Mindeststromanstieg nicht innerhalb einer maximalen Anzahl von Ankerumdrehungen erkannt wurde, wird zum übernächsten Verfahrensschritt (Aktivierung des "normalen" Einklemmschutzes nach Beenden der Anlaufphase) übergegangen.

- Ermittlung des Losbrechens (Kraftschlußphase):

  Die Kraftschlußphase zwischen dem Erkennen des Kraftschlußbeginns und dem Losbrechen der Fensterscheibe charakterisiert den Übergang von der Haftreibung zur Gleitreibung während des Kraftschlusses zwischen dem Elektromotor (Anker) und der Fensterscheibe bzw. dem Fensterheber-Antrieb, d.h. der Motorstrom $I_M$ weist einen abnehmenden Gradienten auf. Falls der abnehmende Gradient des Motorstroms $I_M$ nicht innerhalb einer maximalen Anzahl von Ankerumdrehungen erkannt wurde (diese wird anhand des maximal möglichen Verformungswegs in der Kraftschlußphase vorgegeben), wird zum nächsten Verfahrensschritt (Aktivierung des "normalen" Einklemmschutzes nach Beenden der Anlaufphase) übergegangen.

- Aktivierung Einklemmschutz Anlaufphase:
  In der Kraftschlußphase wird der Einklemmschutz durch Vergleich des gemessenen Motorstroms $I_M$ mit einem (anhand von Vorgabewerten einer Vorgabekurve für den Motorstrom $I_M$ ermittelten) Auslöseschwellwert generiert. Insbesondere wird der Einklemmschutz in der Kraftschlußphase (Anlaufphase) unter Heranziehung von Vorgabewerten $I_{MV}$ für den Motorstrom $I_M$ anhand der Daten zurückliegender Betätigungsvorgänge (Hochläufen der Fensterscheibe, insbesondere des letzten Hochlaufs) realisiert. Die Vorgabewerte $I_{MV}$ werden fortlaufend mit den aktuellen Meßwerten $I_{MM}$ des Motorstroms $I_M$ verglichen und beim überschreiten eines fest definierten Korrekturgrenzwerts für den Differenzwert zwischen Vorgabewert $I_{MV}$ und aktuellem Meßwert $I_{MM}$ entsprechend einer Korrektur der Vorgabekurve angepaßt. Basierend auf diesen angepaßten Vorgabewerten $I_{MV}$ des Motorstroms $I_M$ wird durch Addition eines Offsetwerts $I_{OFF}$ ein Auslöseschwellwert $I_{AS}$ ermittelt und dieser Auslöseschwellwert $I_{AS}$ mit den Meßwerten $I_{MM}$ des Motorstroms $I_M$ verglichen. Überschreitet ein Meßwert $I_{MM}$ des Motorstroms $I_M$ den Auslöseschwellwert $I_{AS}$, wird das Vorliegen eines Einklemmereignisses in der Kraftschlußphase (Anlaufphase) angenommen und eine diesbezüglich vorgesehene Reaktion der Schließvorrichtungen initiiert (bsp. Reversierung des Antriebs und/oder Stop des Elektromotors.

- Aktivierung des "normalen" Einklemmschutzes in der Normalphase nach Beenden der Anlaufphase:

  Das Erreichen des Schließwegs $S_5$ charakterisiert den frühest möglichen Zeitpunkt für die Aktivierung des "normalen" Einklemmschutzes während der "normalen" (gleichförmigen) Bewegung der Fensterscheibe.

Die für den Einklemmschutz in der Anlaufphase benötigten Vorgabewerte $I_{MV}$ des Motorstroms $I_M$ werden unter Berücksichtigung des beim vorhergehenden Hochlauf der Fensterscheibe (beim vorhergehenden Schließvorgang) ermittelten Endwerts des Motorstroms $I_M$, des Extremwerts (des Minimums $I_{M0}$) des Motorstroms $I_M$ im Freilaufbereich als Startwert der Vorgabekurve (dieser Startwert beinhaltet im wesentlichen bereits die Reibungskomponenten von Elektromotor und Schnecken-Getriebeanordnung) und des anhand das (durch die progressive Federrate der Getriebemechanik geprägten) Kraftaufbaus bestimmten Funktionsverlauf der Vorgabekurve gewonnen.

Der schließwegabhängige Verlauf der Verformungskraft beim Kraftaufbau nach dem Kraftschlußbeginn (d.h. im Verformungsbereich und im Losbrech-/ Bewegungsbereich) wird durch ein Polynom n-ter Ordnung für die Motorkenngröße Motorstrom $I_M$ nachgebildet, wobei vorzugsweise analog zur Wegabhängigkeit der Federkraft ein Polynom zweiter Ordnung gewählt wird: die "Federrate"(die erste Ableitung der Federkraft nach dem Weg, bzw. in diesem Falle des Motorstroms $I_M$ nach dem Schließweg s) entspricht einer Geraden, die Steilheit (die zweite Ableitung der Federkraft nach dem Weg, bzw. in diesem Falle des Motorstroms $I_M$ nach dem Schließweg s) einer Konstanten. Die Konstante wird in erster Linie durch die mechanische Anordnung der Schließvorrichtungen bestimmt und ändert sich daher bei konstruktionsidentischen Schließvorrichtungen nur geringfügig; die Gerade bzw. deren Steigung wird insbesondere von der Steifigkeit der Schließvorrichtung (des Fensterheber-Antriebs) bestimmt. In diesem Falle werden die schließwegabhängigen Vorgabewerte $I_{MV}(s)$ des Motorstroms $I_M$ ab der Erkennung (Festlegung) des Stromminimums $I_{M0}$ demnach durch Integration des Stromgradienten $m(s) \equiv dI_M/ds$ gewonnen:

$$I_{MV}(s) = I_{M0} + \int_0^s m(s)\,ds \tag{1}$$

Zur Nachbildung des schließwegabhängigen Verlaufs des Motorstroms $I_M$ gemäß Fig. 1a bzw. 1b wird der Integrationsbereich abhängig vom Schließweg s in zwei Abschnitte unterteilt:

a) linear ansteigender Stromgradient m(s) im Bereich $0 \le s \le s_a$:

$$m(s \le s_a) = m_0 + K \int_0^{s_a} ds \tag{2a}$$

K:    türspezifischer Parameter

$m_0 = dI_{M0}/ds$:  Stromgradient (Federrate) bei ermitteltem Stromminimum $I_{M0}$

Man erhält demnach in diesem Bereich einen parabolischen Verlauf des Motorstroms $I_M$ abhängig vom Schließweg s, welcher die progressive Federrate der Türmechanik widerspiegelt.

b) Bereich $s_a < s \le s_b$ (Endwert):
Nach einem anhand dem letzten Hochlauf der Fensterscheibe (letzter Vorgabeendwert) bestimmten Wegkriterium (Wendepunkt $s_a$) wird der Stromgradient m(s) = $dI_M/ds$ linear bis zum Schließweg $s_b$ (Endwert) auf Null dekrementiert (analog zum Übergang der Fensterscheibe in eine gleichförmige Bewegung). Dieses Wegkriterium (der Wendepunkt $s_a$) wird anhand der beim vorhergehenden Schließvorgang ermittelten Schwergängigkeit der Türe (bsp. unter Verwendung einer Tabellenfunktion) ermittelt. Es ergibt sich in diesem Bereich $s_a < s \le s_b$ daher folgende Relation:

$$m(s_a < s \le s_b) = m(s_a) - c \cdot K \int_{s_a}^{s_b} ds \tag{2b}$$

c: türspezifischer Parameter

Die Integrationskonstante $I_{MO}$ in Gleichung (1) entspricht dem gemessenen Stromminimum, die Integrationskonstante $m_0 \equiv dI_{M0}/ds$ in Gleichung (2a) wird über einen funktionalen Zusammenhang aus dem Stromminimum $I_M0$ ermittelt. Die beiden Integrationsbereiche und damit die beiden Schließwege $s_a$ und $s_b$ werden beispielsweise so festgelegt, daß der Vorgabeendwert $I_{MV}(s = s_b)$ in etwa dem 1.5-fachen des tatsächlich erreichten Endwerts beim vorhergehenden Schließvorgang entspricht.

**Patentansprüche**

1. Verfahren zur Steuerung des Schließvorgangs von Schließvorrichtungen mit mindestens einem elektromotorisch bewegten Teil, wobei zur Gewährleistung eines Einklemmschutzes

  • die Meßwerte mindestens einer für die Belastung des Elektromotors charakteristischen Motorkenngröße kontinuierlich erfaßt und ausgewertet werden,
  • ein ein Einklemmereignis definierender Auslöseschwellwert für die jeweilige Motorkenngröße vorgegeben wird,
  • die Meßwerte der jeweiligen Motorkenngröße mit dem jeweiligen Auslöseschwellwert verglichen werden und beim Überschreiten des Auslöseschwellwerts durch mindestens einen Meßwert eine bestimmte Reaktion der Schließvorrichtungen initiiert wird,

wobei unmittelbar nach Beginn des Schließvorgangs das Anlaufverhalten der Schließvorrichtung in der Anlaufphase des Elektromotors hinsichtlich des Ausgleichs des Antriebsspiels und der Schwergängigkeit der Schließvorrichtung unter Heranziehung der schließwegabhängigen Meßwerte mindestens einer Motorkenngröße bestimmt wird, indem

• der Einklemmschutz in der Anlaufphase abhängig vom schließwegabhängigen Verlauf der mindestens einen Motorkenngröße beim Erreichen eines schließwegabhängigen Aktivierungswerts aktiviert wird,

• nach der Aktivierung des Einklemmschutzes in der Anlaufphase der weitere schließwegabhängige Verlauf der mindestens einen Motorkenngröße bis zum Erreichen einer gleichförmigen Bewegung des elektromotorisch bewegten Teils unter Berücksichtigung der Meßwerte der mindestens einen Motorkenngröße/n des vorhergehenden und des aktuellen Schließvorgangs vorgegeben wird,

wobei die schließwegabhängigen Vorgabewerte der jeweiligen Motorkenngröße fortlaufend bewertet werden, indem jeweils der Differenzwert zwischen schließwegabhängigem Vorgabewert und aktuellem Meßwert gebildet und mit einem Korrekturgrenzwert derart verglichen wird, daß beim Überschreiten des Korrekturgrenzwerts der vorgegebene weitere schließwegabhängige Verlauf der jeweiligen Motorkenngröße an den tatsächlichen Verlauf der Motorkenngröße angepaßt wird,

• der Auslöseschwellwert der mindestens einen Motorkenngröße in Abhängigkeit des vorgegebenen weiteren schließwegabhängigen Verlaufs der jeweiligen Motorkenngröße definiert wird, indem der Auslöseschwellwert der jeweiligen Motorkenngröße mittels der durch Anpassung des vorgegebenen weiteren schließwegabhängigen Verlaufs der Motorkenngröße gewonnenen angepaßten Vorgabewerte der Motorkenngröße und eines die Auslösecharakteristik bestimmenden Offsetwerts definiert wird.

2. Verfahren nach Anspruch 1, **dadurch gekennzeichnet, daß** die schließwegabhängigen Vorgabewerte der jeweiligen Motorkenngröße anhand des schließwegabhängigen Aktivierungswerts, eines Vorgabeendwerts und eines vorgegebenen schließwegabhängigen funktionalen Verlaufs der Motorkenngröße ermittelt werden.

3. Verfahren nach Anspruch 2, **dadurch gekennzeichnet, daß** der Vorgabeendwert anhand des Endwerts der jeweiligen Motorkenngröße des vorhergehenden Schließvorgangs und der vorgegebene schließwegabhängige funktionale Verlauf der Motorkenngröße anhand einer numerischen Funktion und mindestens eines Startwerts der Motorkenngröße bestimmt wird.

4. Verfahren nach Anspruch 3, **dadurch gekennzeichnet, daß** als numerische Funktion eine Parabel 2. Ordnung vorgegeben wird.

5. Verfahren nach einem der Ansprüche 3 oder 4, **dadurch gekennzeichnet, daß** als Startwert der jeweiligen Motorkenngröße der schließwegabhängige Aktivierungswert für die Aktivierung des Einklemmschutzes in der Anlaufphase herangezogen wird.

6. Verfahren nach einem der Ansprüche 1 bis 5, **dadurch gekennzeichnet, daß** als schließwegabhängiger Aktivierungswert für die Aktivierung des Einklemmschutzes in der Anlaufphase entweder der Extremwert einer Motorkenngröße oder der dem nach einer bestimmten Anzahl an Motorumdrehungen zurückgelegten Schließweg entsprechende Meßwert einer Motorkenngröße herangezogen wird.

7. Verfahren nach einem der Ansprüche 1 bis 6, **dadurch gekennzeichnet, daß** beim Vorhandensein eines Ausgleichs des Antriebsspiels die schließwegabhängigen Vorgabewerte der jeweiligen Motorkenngröße angepaßt werden.

8. Verfahren nach Anspruch 7, **dadurch gekennzeichnet, daß** das Vorhandensein eines Ausgleichs des Antriebsspiels anhand der Bestimmung der Bewegungsrichtung des vorhergehenden Betätigungsvorgangs der Schließvorrichtung festgelegt wird.

9. Verfahren nach Anspruch 7 oder 8, **dadurch gekennzeichnet, daß** das Vorhandensein eines Ausgleichs des Antriebsspiels zusätzlich anhand der Bestimmung der aktuellen Position des elektromotorisch bewegten Teils und/oder des schließwegabhängigen Verlaufs mindestens einer Motorkenngröße festgelegt wird.

10. Verfahren nach Anspruch 9, **dadurch gekennzeichnet, daß** die Bestimmung der aktuellen Position des elektromotorisch bewegten Teils anhand eines Zählerwerts und die Bestimmung des schließwegabhängigen Verlaufs der Motorkenngröße/n anhand des Extremwerts der Motorkenngröße erfolgt.

11. Verfahren nach einem der Ansprüche 1 bis 10, **dadurch gekennzeichnet, daß** der Auslöseschwellwert unter Berücksichtigung von Störgrößen, insbesondere von Bordnetzstörungen oder mechanischen Schwingungen der Schließvorrichtung angepaßt wird.

**12.** Verfahren nach einem der Ansprüche 1 bis 11, **dadurch gekennzeichnet, daß** als Motorkenngröße zumindest der Motorstrom und als Startwert für den vorgegebenen funktionalen Verlauf der Motorkenngröße das Minimum des Motorstroms herangezogen wird.

**Claims**

**1.** Method of controlling the closing process for closure devices including at least one electric motor operated part, whereby, for the purposes of ensuring proper functioning of an anti-clamping arrangement

- the values of at least one motor parameter that is characteristic of the load on the electric motor are continuously measured and evaluated,
- a triggering threshold value defining a clamping event for the motor parameter being used is predetermined,
- the values of the motor parameter being used are compared with the corresponding triggering threshold value and a specific reaction of the closure devices is initiated when the triggering threshold value is exceeded by at least one of the measured values,

whereby, immediately after the beginning of the closing process, the starting behavior of the closure device in the starting phase of the motor is determined in regard to the process for compensating for backlash in the drive and the binding of the closure device by taking into account the measured closure-path-dependent values of at least one motor parameter, in that

- the anti-clamping arrangement is activated in the starting phase in dependence on the closure-path-dependent behavior of the at least one motor parameter when attaining a closure-path-dependent activating value,
- after the activation of the anti-clamping arrangement in the starting phase, the further closure-path-dependent behavior of the at least one motor parameter up to the point until attainment of a uniform movement of the electric motor operated part is predetermined by taking into account the value of the at least one motor parameter (s) measured in the preceding closure process and that measured in the currently effective closure process, whereby, the closure-path-dependent preset values of the motor parameter being used are continuously evaluated in that the difference value between the closure-path-dependent preset value and the actual measured value is formed and compared with a correcting limiting value in such a way that the predetermined further closure-path-dependent behavior of the motor parameter being used is matched to the actual behavior of the motor parameter should the correcting limiting value be exceeded,
- the triggering threshold value of the at least one motor parameter is defined in dependence on the predetermined further closure-path-dependent behavior of the motor parameter being used, in that the triggering threshold value of the motor parameter being used is defined by means of the adjusted preset values of the motor parameter that were obtained by the process of matching the predetermined further closure-path-dependent behavior of the motor parameter and an offset value that determines the triggering characteristic.

**2.** Method in accordance with Claim 1, **characterized in that** the closure-path-dependent preset values of the motor parameter being used are obtained with the aid of the closure-path-dependent activating value, a preset end value and a predetermined closure-path-dependent functional behavior of the motor parameter.

**3.** Method in accordance with Claim 2, **characterized in that** the preset end value is determined with the aid of the end value of the motor parameter used in the preceding closure process and the predetermined closure-path-dependent functional behavior of the motor parameter is determined with the aid of a numerical function and at least one start value for the motor parameter.

**4.** Method in accordance with Claim 3, **characterized in that** a parabola of second order is provided as the numerical function.

**5.** Method in accordance with either of Claims 3 or 4, **characterized in that** the closure-path-dependent activating value for the activation of the anti-clamping arrangement in the starting phase is enlisted as the starting value for the motor parameter being used.

**6.** Method in accordance with any one of the Claims 1 to 5, **characterized in that** either the extreme value of a motor parameter or the measured value of a motor parameter corresponding to the length of closure path covered after a certain number of revolutions of the motor is used as the closure-path-dependent activating value for the activation of the anti-clamping arrangement in the starting phase.

**7.** Method in accordance with any one of the Claims 1 to 6, **characterized in that** the closure-path-dependent preset values of the motor parameter being used are adjusted when the backlash in the drive is being balanced out.

**8.** Method in accordance with Claim 7, **characterized in that** the existence of a balancing process for the backlash in the drive is defined with the aid of the determination of the direction of movement in the preceding actuating process for the closure device.

**9.** Method in accordance with Claim 7 or 8, **characterized in that** the existence of a balancing process for the backlash in the drive is additionally defined with the aid of the determination of the actual position of the electric motor operated part and/or the closure-path-dependent behavior of at least one motor parameter.

**10.** Method in accordance with Claim 9, **characterized in that** the determination of the actual position of the electric motor operated part is effected with the aid of a counting value, and the determination of the closure-path-dependent behavior of the motor parameter (s) is effected with the aid of the extreme value of the motor parameter.

**11.** Method in accordance with any one of the Claims 1 to 10, **characterized in that** the triggering threshold value is adjusted by taking into account disruptive effects, especially disruptions in the on-board power supply, or mechanical vibrations of the closure device.

**12.** Method in accordance with any one of the Claims 1 to 11, **characterized in that** at least the motor current is used as the motor parameter, and the minimum level of motor current is used as the start value for the predetermined functional behavior of the motor parameter.


**Revendications**

**1.** Procédé de commande du processus de fermeture de dispositifs de fermeture équipés au moins d'un élément mû par moteur électrique selon lequel, en vue de la garantie d'une protection contre un coincement

- les valeurs de mesure au moins d'une caractéristique de moteur représentatif de la surcharge du moteur électrique sont détectées et évaluées continûment,
- une valeur de seuil de déclenchement définissant un événement de coincement est prescrite pour la caractéristique de moteur respective,
- les valeurs de mesure des caractéristiques respectives du moteur sont comparées à la valeur de seuil de déclenchement respective et lors du dépassement de la valeur de seuil de déclenchement par au moins une valeur de mesure, une réaction déterminée des dispositifs de fermeture est déclenchée,

immédiatement après le début du processus de fermeture, le comportement de démarrage du dispositif de fermeture au cours de la phase de démarrage du moteur électrique en ce qui concerne le rattrapage du jeu de l'entraînement et de la dureté du dispositif de fermeture est déterminé en tirant parti des valeurs de mesure fonctions de la course de fermeture au moins d'une caractéristique du moteur,

- la protection contre un coincement au cours de la phase de démarrage est activée en fonction de l'allure dépendant de la course de fermeture au moins d'une caractéristique du moteur lors de l'atteinte d'une valeur d'activation fonction de la course de fermeture,
- après l'activation de la protection contre un coincement au cours de la phase de démarrage, l'autre allure fonction de la course de fermeture d'au moins une caractéristique du moteur jusqu'à l'obtention d'un mouvement uniforme de l'élément mû par un moteur électrique est prédéterminée en tenant compte des valeurs de mesure d'au moins une caractéristique du moteur du processus de fermeture précédent et du processus de fermeture actuel, les valeurs de prescription fonctions de la course de fermeture de la caractéristique respective du moteur sont évaluées continûment, la valeur de différence entre la valeur de prescription fonction de la course de fermeture et la valeur de mesure réelle est formée et comparée à une valeur limite de correction de telle sorte que, lors du franchissement de la valeur limite de correction, l'autre allure fonction de la course de fermeture prescrite de la caractéristique respective du moteur est adaptée à l'allure effective de la caractéristique du moteur,
- la valeur de seuil de déclenchement d'au moins une caractéristique du moteur est définie en fonction de l'autre allure dépendant de la course de fermeture prédéterminée de le caractéristique de moteur respective, la valeur de seuil de déclenchement de la caractéristique respective du moteur est définie au moyen des valeurs de prescription de la caractéristique du moteur obtenue par adaptation de l'autre allure fonction de la course de fermeture prescrite de la caractéristique du moteur et d'une valeur de décalage déterminant la caractéristique de déclenchement.

2. Procédé selon la revendication 1, **caractérisé en ce que** les valeurs de prescription fonctions de la course de fermeture des caractéristiques respectives du moteur sont obtenues à l'aide de la valeur d'activation fonction de la course de fermeture, d'une valeur finale de prescription et d'une allure fonctionnelle dépendant de la course de fermeture prescrite de la caractéristique du moteur.

3. Procédé selon la revendication 2, **caractérisé en ce que** la valeur finale de prescription est déterminée à l'aide de la valeur finale de la caractéristique respective du moteur du processus de fermeture précédent et l'allure fonctionnelle dépendant de la course de fermeture prescrite de la caractéristique du moteur est déterminée à l'aide d'une fonction numérique et au moins d'une valeur initiale de la caractéristique du moteur.

4. Procédé selon la revendication 3, **caractérisé en ce qu'**en tant que fonction numérique est prescrite une parabole du second ordre.

5. Procédé selon l'une des revendications 3 ou 4, **caractérisé en ce qu'**en tant que valeur initiale de la caractéristique respective du moteur est utilisée la valeur d'activation en fonction de la course de fermeture pour l'activation de la protection contre un coincement au cours de la phase de démarrage.

6. Procédé selon l'une quelconque des revendications 1 à 5, **caractérisé en ce qu'**en tant que valeur d'activation fonction de la course de fermeture pour l'activation de la protection contre un coincement au cours de la phase de démarrage est utilisée, soit la valeur extrême d'une caractéristique du moteur, soit la valeur de mesure d'une caractéristique du moteur correspondant à la course de fermeture parcouru après un nombre déterminé de rotations de moteur.

7. Procédé selon l'une quelconque des revendications 1 à 6, **caractérisé en ce que** dans le cas de la présence d'un rattrapage du jeu de l'entraînement, les valeurs de prescription fonctions de la course de fermeture sont adaptées à la caractéristique respective du moteur.

8. Procédé selon la revendication 7, **caractérisé en ce que** la présence d'un rattrapage du jeu de l'entraînement est déterminée à l'aide de la détermination du sens de mouvement du processus de manoeuvre précédent du dispositif de fermeture.

9. Procédé selon la revendication 7 ou 8, **caractérisé en ce que** la présence d'un rattrapage du jeu de l'entraînement est déterminée en outre à l'aide de la détermination de la position actuelle de l'élément mû par un moteur électrique et/ou de l'allure fonction de la course de fermeture au moins d'une caractéristique du moteur.

10. Procédé selon la revendication 9, **caractérisé en ce que** la détermination de la position actuelle de l'élément mû par un moteur électrique s'effectue à l'aide d'une valeur de compteur et la détermination de l'allure fonction de la course de fermeture de la ou des caractéristiques du moteur s'effectue à l'aide de la valeur extrême de la caractéristique du moteur.

11. Procédé selon l'une quelconque des revendications 1 à 10, **caractérisé en ce que** la valeur de seuil de déclenchement est adaptée en tenant compte de grandeurs parasites, en particulier de parasites du réseau de bord ou d'oscillations mécaniques du dispositif de fermeture.

12. Procédé selon l'une quelconque des revendications 1 à 11, **caractérisé en ce qu'**on utilise, en tant que caractéristique du moteur, au moins le courant du moteur et en tant que valeur initiale pour l'allure fonctionnelle prédéterminée de la caractéristique du moteur, le minimum du courant du moteur.

FIG.1a

FIG.1b

```
        ┌─────────────────────┐
        │  Aktivierung Motor  │
        └─────────────────────┘
                   │
                   ▼
        ╱─────────────────╲      nein     ┌──────────────┐
        ⟨  Strommaximum    ⟩ ─────────────▶│  Stop Motor  │
        ╲   erkannt ?     ╱               └──────────────┘
                   │ ja
                   ▼
        ╱─────────────────╲      nein     ┌────────────────────────┐
        ⟨  Stromminimum    ⟩ ─────────────▶│  Vorgabewert           │
        ╲   erkannt ?     ╱               │  Motorumdrehungen      │
                   │ ja                    │  abwarten              │
                   │                       └────────────────────────┘
                   ▼                                  │
        ╱─────────────────────╲  nein
        ⟨ Kraftschlussbeginn   ⟩ ─────────────────────────────────────┐
        ╲    erkannt ?        ╱                                        │
                   │ ja                                                │
                   ▼                                                   │
        ┌─────────────────────┐                                       │
        │    Festlegung       │                                       │
        │   Stromminimum      │                                       │
        └─────────────────────┘                                       │
                   │                                                   │
                   ▼                                                   │
        ╱─────────────────╲      nein     ┌────────────────────────┐  │
        ⟨   Losbrechen     ⟩ ─────────────▶│  Vorgabewert           │  │
        ╲   erkannt ?     ╱               │  Motorumdrehungen      │  │
                   │ ja                    │  abwarten              │  │
                   │                       └────────────────────────┘  │
                   │                                  │                 │
        ───────────┼──────────────────────────────────────────────────
```

FIG. 2.2


FIG. 2.1

FIG. 2.1

```
┌─────────────────────┐
│     Aktivierung      │
│   Einklemmschutz     │
│     Anlaufphase      │
└─────────────────────┘
           │
           ▼
┌─────────────────────┐
│  Ermittlung von     │
│ Vorgabewerten bzw.  │
│   Vorgabekurven     │
└─────────────────────┘
           │
           ▼
┌─────────────────────┐
│     Vergleich       │
│   Vorgabewerte      │
│   mit Messwerte     │
└─────────────────────┘
           │
           ▼
      Differenz >              ja     ┌──────────────────┐
  Korrekturgrenzwert ?    ─────────→  │    Korrektur     │
                                       │   Vorgabekurve   │
       nein                            └──────────────────┘

   Auslöseschwellwert          ja     ┌──────────────────────┐
     überschritten ?      ─────────→  │   Stop Motor /       │
                                       │ Reversierung Antrieb │
       nein                            └──────────────────────┘

     Anlaufphase               ja     ┌──────────────────┐
      beendet ?            ─────────→  │   Aktivierung    │
                                       │  Einklemmschutz  │
       nein                            │   Normalphase    │
                                       └──────────────────┘
```

FIG. 2.2